# EUROPEAN PATENT APPLICATION

(11) **EP 4 276 704 A1**
(43) Date of publication of application: **15.11.2023**
(21) Application number: 21917700.3
(22) Date of filing: 23.12.2021
(51) Int. Cl.: G06N 20/00

(54) **INFORMATION PROCESSING DEVICE, INFORMATION PROCESSING METHOD, AND PROGRAM**

(30) Priority: 08.01.2021 JP 2021001769
(71) Applicant: Sony Group Corporation, Tokyo 108-0075 (JP)
(72) Inventor: ISOZAKI, Takashi, Tokyo 141-0022 (JP); YAMAMOTO, Masahiro, Tokyo 141-0022 (JP); NODA, Atsushi, Tokyo 141-0022 (JP)
(74) Representative: 2SPL Patentanwälte PartG mbB
(86) International application number: PCT/JP2021/047877
(87) International publication number: WO 2022/149480

(57) **Abstract**

An information processing apparatus (100) includes a control unit (130). The control unit (130) selects an input variable that affects a prediction result as a first explanatory variable based on a causal model regarding a causal relationship between a plurality of input variables and the prediction result in a prediction model using the machine learning. The control unit (130) outputs information on the selected first explanatory variable.

## Description

### Field

The present disclosure relates to an information processing apparatus, an information processing method, and a program.

### Background

In recent years, there has been a demand for improvement in data analysis technology for extracting useful information from data such as big data. The analysis result is used to understand a phenomenon that has already occurred, predict the future, control, intervene, or the like. For example, a technique of analyzing a prediction model and outputting a variable having a large contribution degree to a prediction result is known.

### Citation List

### Non-Patent Literature

Non-Patent Literature 1: M. T. Ribeiro, S. Singh, C. Guestrin, "Why should I trust you? Explaining the Predictions of Any Classifier", the 22nd ACM SIGKDD International Conference on Knowledge Discovery and Data Mining, pp.1135-1144, 2016.
Non-Patent Literature 2: S. M. Lundberg and S. I. Lee, "A Unified Approach to Interpreting Model Predictions", Advances in Neural Information Processing Systems 30", pp.4765-4774, 2017.

### Summary

### Technical Problem

In the above technique, it is assumed that the relationship between the prediction result and the variable is linear, and the analysis is performed. Furthermore, in the above technology, by adding the contribution degrees of the plurality of variables, the plurality of variables is output as a complex reason leading to the prediction result.

The above technique has room for improvement in terms of outputting a variable suitable as a reason. In particular, in the above technique, when a complex reason is output, only the contribution degrees of the plurality of variables are added, and the dependence relationship of the plurality of variables on the combination pattern of the categories has not been considered. For example, it is assumed that the variable "sex" includes categories "male" and "female", and the variable "age" includes categories "teens", "twenties", "thirties", "forties", and "over fifties". A combination of categories of variables, for example, "female" in "teens" and "male" in "thirties" may greatly differ in contribution degree to prediction. In this way, it is desirable to output a complex reason more appropriate for the prediction result in consideration of the contribution degree of the combination pattern of the categories of the plurality of variables to the prediction.

Therefore, the present disclosure proposes an information processing apparatus, an information processing method, and a program capable of outputting a variable more suitable as a reason when a complex reason for a prediction result is output.

Note that the above problem or object is merely one of a plurality of problems or objects that can be solved or achieved by a plurality of embodiments disclosed in the present specification.

### Solution to Problem

According to the present disclosure, an information processing apparatus is provided. The information processing apparatus includes a control unit. The control unit selects an input variable that affects a prediction result as a first explanatory variable based on a causal model regarding a causal relationship between a plurality of input variables and the prediction result in a prediction model using the machine learning. The control unit outputs information on the selected first explanatory variable.

### Brief Description of Drawings

FIG. 1 is a block diagram illustrating an example of a logical configuration of an information processing apparatus according to an embodiment of the present disclosure.
FIG. 2 is a diagram illustrating an example of a prediction model acquired by a causal model estimation unit according to the embodiment of the present disclosure.
FIG. 3 is a diagram illustrating an example of a causal model estimated by the causal model estimation unit according to the embodiment of the present disclosure.
FIG. 4 is a flowchart illustrating a flow of prediction model analysis processing executed by the information processing apparatus according to the embodiment of the present disclosure.
FIG. 5 is a diagram illustrating an example of a causal model estimated by an information processing apparatus according to an application example of the embodiment of the present disclosure.
FIG. 6 is a diagram illustrating an example of a UI screen output by an information processing apparatus according to the application example of the embodiment of the present disclosure.
FIG. 7 is a diagram illustrating an example of a UI screen output by the information processing apparatus according to the application example of the embodiment of the present disclosure.
FIG. 8 is a diagram illustrating an example of a UI screen output by the information processing apparatus according to the application example of the embodiment of the present disclosure.
FIG. 9 is a diagram illustrating an example of a UI screen output by the information processing apparatus according to the application example of the embodiment of the present disclosure.
FIG. 10 is a diagram illustrating a causal relationship of a prediction model of a recidivism determination system.
FIG. 11 is a table illustrating a conditional probability of the level of the nearest node calculated by the information processing apparatus according to the embodiment of the present disclosure.
FIG. 12 is a diagram illustrating an example of a UI screen output by an information processing apparatus according to a modification of the embodiment of the present disclosure.
FIG. 13 is a block diagram illustrating an example of a hardware configuration of an information processing apparatus according to the present embodiment.

### Description of Embodiments

Hereinafter, embodiments of the present disclosure will be described in detail with reference to the accompanying drawings. Note that, in the present specification and the drawings, components having substantially the same functional configuration are denoted by the same reference numerals and the duplicate description is omitted.

One or a plurality of embodiments (including examples and modifications) described below can each be implemented independently. On the other hand, at least some of the plurality of embodiments described below may be appropriately combined with at least some of other embodiments to be implemented. The plurality of embodiments can include novel features different from each other. Therefore, the plurality of embodiments can contribute to solving different objects or problems from each other and can exhibit different effects from each other.

Note that the description will be given in the following order.
1. Outline of Proposed Technology
2. Configuration Example of Information Processing Apparatus
3. Analysis Processing
4. Application Example
4.1. Application Example to Data Analysis System for Manufacturing System
4.2. Application Example to Recidivism Determination System
5. Other Embodiments
6. Modification
7. Hardware Configuration Example
8. Summary

### <<1. Outline of Proposed Technology>>

In recent years, a prediction model (predictor) based on machine learning has been used in various situations due to improvement in performance of machine learning. On the other hand, there are many cases where no ground is given to the prediction result output from the prediction model, and the user may feel that it is difficult to use the prediction model. As a result, there is a concern that the use of the prediction model may remain in a limited range.

As described above, in order to promote the use of the prediction model, it is desirable that the predictor presents the grounds (reasons) together with the prediction result.

In response to this demand, for example, many techniques for automatically outputting an input variable considered to be important (hereinafter, it is described as an important variable) as a reason for prediction among input variables of a prediction model have been proposed.

However, the above technique outputs an important variable calculated based on a correlation pattern with an output variable that is a prediction result, and a causal viewpoint is not considered. Therefore, the possibility that the important variable output as the reason for the prediction and the output variable are pseudo-correlated is not excluded, and it cannot be said that an appropriate reason is output.

If the reason (important variable) to be output is not appropriate, the prediction result may not be improved even if intervention, measures, or the like is performed based on the reason. In addition, since humans tend to perceive the correlation as causal interpretation, there is a possibility that the user perceives the reason presented based on the correlation as causality and learns erroneous knowledge. Therefore, a technology capable of outputting a more appropriate variable as a reason for the prediction result is desired.

Therefore, in the technology of the present disclosure, an information processing apparatus selects an input variable that affects a prediction result as an important variable (an example of a first explanatory variable) based on a causal model regarding a causal relationship between a plurality of input variables and the prediction variable in the prediction model using the machine learning. The information processing apparatus outputs information on the selected important variable.

The information processing apparatus outputs an input variable (important variable) that is a reason for a prediction result based on information indicating whether the relationship is a pseudo correlation in the prediction model generated by using machine learning. For example, the information processing apparatus according to the technology of the present disclosure selects an input variable that is not in a pseudo correlation relationship from among input variables as an important variable that is a reason for the prediction result of the prediction model based on a pseudo correlation relationship between an input variable and an output variable of the prediction model generated by machine learning. The information processing apparatus outputs information on the selected important variable.

For the above selection, for example, the information processing apparatus determines whether each input variable is conditionally independent of the output variable, and selects the input variable determined not to be conditionally independent as the important variable.

More specifically, the information processing apparatus constructs a causal model in which a variable of interest (for example, the output variable or the node of the hidden layer immediately before the output variable in the neural network to be described later) is an objective variable and an input variable is an explanatory variable.

The information processing apparatus selects the input variable determined not to be conditionally independent as the important variable by selecting the important variable from the input variables included in the constructed causal model.

The information processing apparatus selects an input variable that does not affect the prediction result as a second important variable (an example of a second explanatory variable) based on the constructed causal model. The information processing apparatus outputs information on the selected second important variable while distinguishing the information from the important variable described above.

As a result, the information processing apparatus can select the important variable in consideration of the cause and effect, particularly the pseudo correlation, and can present a more appropriate important variable as the reason for the prediction result to the user.

### <<2. Configuration Example of Information Processing Apparatus>>

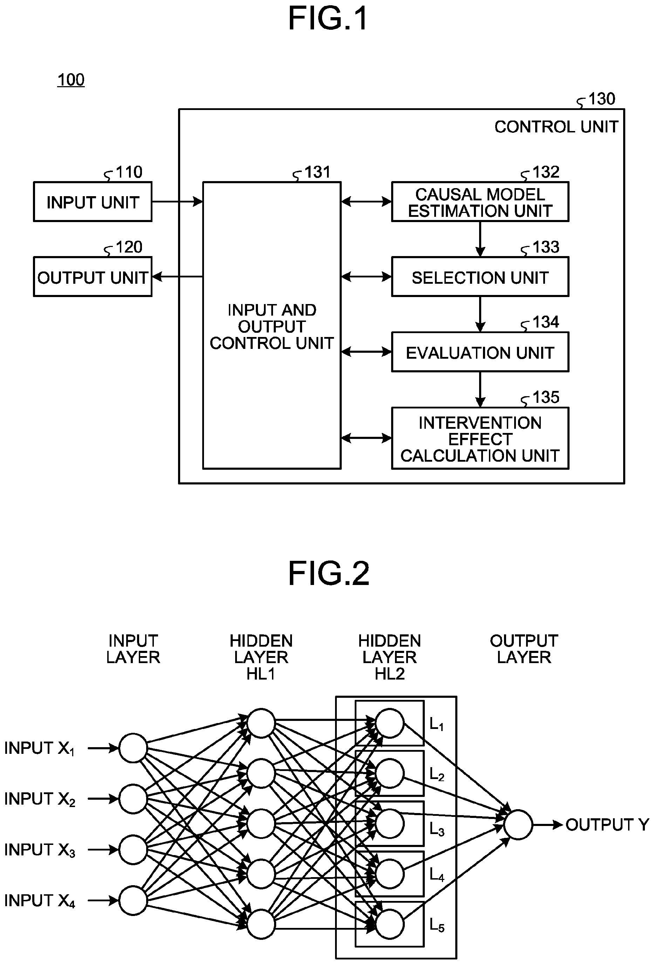

FIG. 1 is a block diagram illustrating an example of a logical configuration of an information processing apparatus 100 according to an embodiment of the present disclosure. As illustrated in FIG. 1, the information processing apparatus 100 according to the present embodiment includes an input unit 110, an output unit 120, and a control unit 130.

### [Input Unit 110]

The input unit 110 has a function of receiving inputs of various types of information. The input unit 110 outputs the input information to the control unit 130.

The input unit 110 receives an input of a prediction model to be analyzed. The prediction model here is a machine learning system generated by machine learning, and examples thereof include a neural network and a random forest.

The input unit 110 receives various inputs for analysis. For example, the input unit 110 receives an input such as the number n of explanatory variables included in a combination of explanatory variables described later. The input unit 110 may include any input devices such as a touch panel, a keyboard, or a mouse, and receives input of these pieces of information by a user operation to the input device. Furthermore, the input unit 110 may include a voice input unit such as a microphone.

### [Output Unit 120]

The output unit 120 has a function of outputting various types of information. The output unit 120 outputs various types of information under the control of the control unit 130. The output unit 120 includes a display device, and may output, for example, a UI screen indicating an analysis result. The output unit 120 includes a voice output device, and may output, for example, a voice for prompting the user to input a voice. The output unit 120 includes a communication device conforming to any communication standard, and may output information indicating an analysis result to, for example, another information processing apparatus or a storage device. The output unit 120 includes a printing device, and may print, for example, a report indicating an analysis result.

### [Control Unit 130]

The control unit 130 has a function of controlling the operation of the entire information processing apparatus 100. As illustrated in FIG. 1, the control unit 130 includes an input and output control unit 131, a causal model estimation unit 132, a selection unit 133, an evaluation unit 134, and an intervention effect calculation unit 135. The control unit 130 may include components other than these components.

### (Input and Output Control Unit 131)

The input and output control unit 131 is an interface between the input unit 110 and the output unit 120, and other components (the causal model estimation unit 132, the selection unit 133, the evaluation unit 134, and the intervention effect calculation unit 135) included in the control unit 130. The input and output control unit 131 outputs the information input by the input unit 110 to another component corresponding to the information, and causes the output unit 120 to output the information output from the other component. For example, the input and output control unit 131 outputs the prediction model input by the input unit 110 to the causal model estimation unit 132. Furthermore, the input and output control unit 131 generates and causes the output unit 120 to output a UI screen indicating an analysis result, and outputs information indicating a user operation on the UI screen input by the input unit 110 to another component corresponding to the user operation.

### (Causal Model Estimation Unit 132)

The causal model estimation unit 132 generates a causal model using the variable of interest included in the prediction model acquired via the input and output control unit 131 as the objective variable.

The prediction model may be acquired from, for example, a storage device (not illustrated) or may be acquired from a storage unit (not illustrated) of the information processing apparatus 100. Alternatively, the information processing apparatus 100 may generate a prediction model. The prediction model is, for example, a learning system generated based on machine learning. The prediction model is only required to perform a predetermined operation on the input variable and output an output variable that is a prediction result. Examples of the prediction model include a neural network and a random forest. However, in the following description, unless otherwise specified, it is assumed that the information processing apparatus 100 acquires a neural network as a prediction model.

In the neural network, prediction, identification, classification, and the like are output by complicatedly combining the information of the input variable group. In the hidden layer of the neural network, the information of the input variable group is variously combined to form a pattern, but since this pattern is complicated, it is difficult for the user to understand how the output variable is determined.

Therefore, in the technology of the present disclosure, attention is focused on the hidden layer (hereinafter, also referred to as a nearest layer) closest to the output layer (output variable), and the information processing apparatus 100 presents information indicating what combination of input variable groups the node (hereinafter, it is also referred to as a nearest node) group is configured with to the user. In other words, the information processing apparatus 100 focuses on the nearest layer immediately before the output layer and generates information for explaining each nearest node by the input variable group.

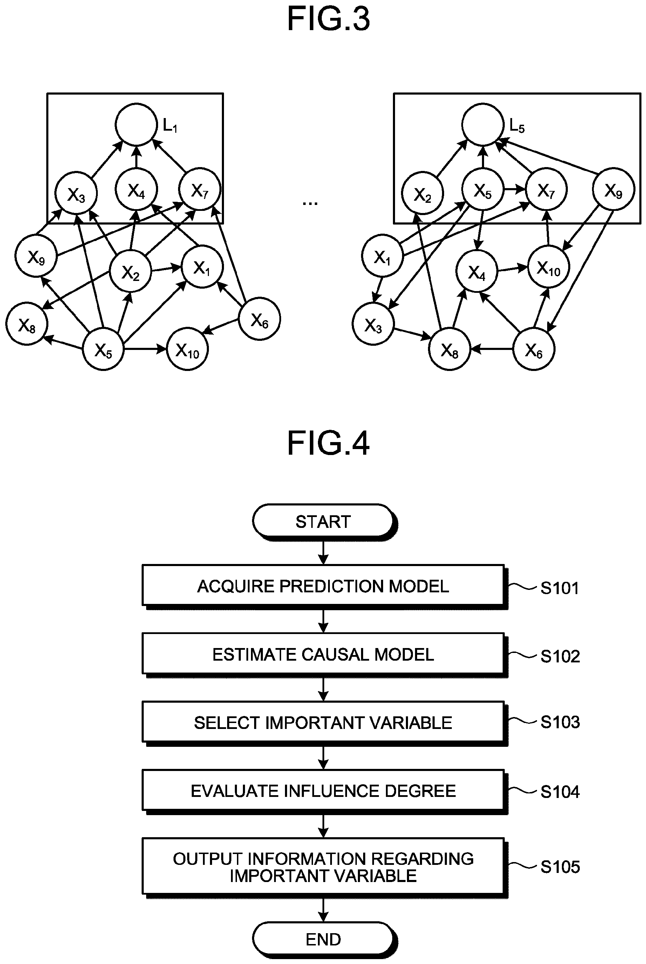

Therefore, first, the causal model estimation unit 132 estimates a causal model for explaining a feature amount acquired by learning for each nearest node. This point will be described with reference to FIGS. 2 and 3.

FIG. 2 is a diagram illustrating an example of a prediction model acquired by the causal model estimation unit 132 according to an embodiment of the present disclosure.

As illustrated in FIG. 2, the causal model estimation unit 132 acquires a neural network including an input layer, two hidden layers HL1 and HL2, and an output layer as a prediction model. Here, it is assumed that the neural network outputs one output variable Y to the input variable group {X1, X2, X3, X4}, and each of the hidden layers HL1 and HL2 has five hidden nodes. In addition, it is assumed that the hidden layer HL2, which is the nearest layer, includes hidden nodes L1 to L5, which are the nearest nodes.

The causal model estimation unit 132 estimates a causal model having a variable of interest (here, the nearest nodes L1 to L5) included in the prediction model as an objective variable and an input variable group {X1, X2, X3, X4, ···} as an explanatory variable for each variable of interest.

For example, the causal model estimation unit 132 estimates a causal model with N input variables Xn (n = 1 to 4 in FIG. 2) for each of the M nearest nodes Lm (m = 1 to 5 in FIG. 2). That is, the causal model estimation unit 132 generates M causal models.

The causal model estimation unit 132 calculates causal information that is an index of the causal relationship between the nearest node Lm and each input variable Xn, thereby detecting the presence or absence and strength of the causal relationship between the variables. The causal information is, for example, a statistic indicating a causal relationship between two variables. The causal model estimation unit 132 detects the presence or absence and the strength of the causal relationship between the two variables by a method by independent component analysis, a method of maximizing the estimation result by the penalized maximum likelihood method or the Bayesian method as a score, a method of estimating by a statistical test of conditional independence between variables, or the like. The causal model estimation unit 132 calculates causal information using, for example, learning data used to generate a neural network.

FIG. 3 is a diagram for explaining an example of a causal model estimated by the causal model estimation unit 132 according to the embodiment of the present disclosure.

In FIG. 3, the causal model estimated by the causal model estimation unit 132 is illustrated as causal information indicating a causal relationship between a plurality of variables, a so-called causal graph. As illustrated in FIG. 3, the causal graph is estimated for each of the hidden nodes L1 to L5 that are objective variables. In FIG. 3, for the hidden nodes L1 and L5 and Xn as an explanatory variable, the direction of the cause and effect of the transformation is indicated by an arrow (cause , result). That is, the causal graph illustrated in FIG. 3 is a directed graph. In other words, the causal information illustrated in FIG. 3 is information of a graphical model with a probability distribution in which variables of probabilistic and statistical causes and results are connected by arrows.

Note that the causal graph illustrated in FIG. 3 is an example of causal information, and the causal information may be information in which causal relationships between variables are listed, and may be any information as long as the causal relationship between a plurality of variables can be grasped.

Among the input variables included in the causal model estimated by the causal model estimation unit 132, the input variable having a smaller path (number of arrows) to reach the hidden node Lm as the objective variable and a closer distance to the hidden node Lm has a stronger causal relationship with the objective variable. Since the variable directly connected to the hidden node Lm on the graph is a variable as a cause directly affecting Lm rather than an indirect cause, the variable may be preferentially extracted as an important variable.

For example, in the causal model of the hidden node L1 illustrated in FIG. 3, there is no arrow from the input variable X10 to the hidden node L1, and it is found that the input variable X10 has no causal relationship with the hidden node L1, is in a conditional independent relationship, and is in a pseudo correlation relationship. Since the contribution degree and the correlation of the input variable X10 calculated by the conventional method may be large, it is difficult to determine the pseudo correlation from the contribution degree and the magnitude of the correlation as in the conventional method. Further, the input variable X3 is connected to the hidden node L1 by one arrow. That is, the input variable X3 is directly connected to the hidden node L1. On the other hand, the input variable X1 is connected to the hidden node L1 via the input variable X4 by two arrows. That is, the input variable X1 is not directly connected to the hidden node L1. This indicates that the direct causal relationship between the input variable X3 and the hidden node L1 is stronger than that between the input variable X1 and the hidden node L1. Therefore, for example, the information processing apparatus 100 can preferentially extract the input variable X3 as the important variable without extracting the input variable X1. As a result, as will be described later, it is possible to eliminate redundant explanatory variables to narrow down the number of combinations of important variables to increase calculation efficiency, or to reduce types of similar explanatory variables to present reasons for prediction to the user in an easy-to-understand manner.

Note that the causal model estimated by the causal model estimation unit 132 may include an input variable having a causal relationship with the hidden node Lm. In other words, an input variable that is not conditionally independent of the hidden node Lm is included in the causal model, and an input variable that is conditionally independent of the hidden node Lm is not included in the causal model. In this manner, the causal model estimation unit 132 can generate the causal model of the hidden node Lm with the input variable having no pseudo correlation.

### (Selection Unit 133)

Refer back to FIG. 1. The selection unit 133 selects a variable for explaining the hidden node Lm from among the input variables based on the causal model estimated by the causal model estimation unit 132. Such a variable can be said to be a variable that has a high contribution degree to the calculation result in the hidden node Lm and contributes to the calculation result. Therefore, such a variable is also described as an important variable.

The selection unit 133 extracts a factor (input variable) group {Xmj} directly connected to the hidden node Lm by the network of the causal model from the causal model of each hidden node Lm. As illustrated in Expression (1), Xmj is a subset of the variable group DI (Lm) and indicates the input variable Xj belonging to the causal model of the hidden node Lm.${X}_{mj} ⊆ DI \left({L}_{m}\right)$

Note that the selection unit 133 may select all the factors directly connected to the hidden node Lm as important variables, or may select some of the factors. For example, if the number of factor groups (important variable candidates) {Xmj} directly connected to the hidden node Lm is equal to or less than a threshold value TH1, the selection unit 133 selects all the factor groups as important variables. On the other hand, when the number of factor groups {Xmj} is larger than the threshold value TH1, the selection unit 133 selects S input variables as important variables from the important variable candidates according to the strength of the relationship between the important variable candidates and the objective variable.

Alternatively, the selection unit 133 may select S combinations of P input variables according to the strength of the relationship between the combination candidates of the P input variables in the factor group {Xmj} and the objective variable. The selection unit 133 calculates first information indicating the strength of the relationship between the P input variables and the objective variable, and selects each input variable included in the S combinations having the larger first information as the important variable.

The first information is an index indicating the strength of the relationship between the combination of the important variable candidates and the objective variable. The first information is a value indicating the strength of the relationship calculated based on entropy, a mutual information amount, a correlation coefficient, a partial correlation coefficient, a p-value of a test, a statistical measure of other independence or conditional independence, or a combination thereof. Such values quantify the combining effect. A large value means that the combining effect is large, and a small value means that the combining effect is small.

Here, a plurality of input variables can give an influence different from the influence of the input variable alone to a certain variable of interest. A certain variable of interest is a variable of interest as an analysis target and refers to the hidden node Lm here. Such an effect is referred to as a combining effect.

Hereinafter, the first information is also referred to as a first index J of a combining effect. When the objective variable (variable of interest) is L and the important variable candidates are Xn1 and Xn2 (in other words, P = 2), the first index J in Xn1, Xn2, and L can be calculated as in Expression (3).$\begin{matrix}J = H \left(L| Xn 1\right) - H \left(L| Xn 1 , Xn 2\right) \\ = I \left(L;Xn2| Xn 1\right)\end{matrix}$

Wherein H is information entropy in information theory, and I is a mutual information amount defined based on the information entropy. H(L|Xn1) in the above Expression (3) is the conditional information entropy of L with Xn1 as a condition, and H(L|Xn1,Xn2) is the conditional information entropy of L with Xn1 and Xn2 as conditions. In addition, I(L;Xn2|Xn1) is a mutual information amount of L and Xn2 with Xn1 as a condition, and the above Expression (3) is uniquely established (hereinafter, information entropy is simply referred to as entropy). According to the above Expression (3), the first index J of the combining effect is an index indicating how much the information amount is increased by the newly added explanatory variable Xn2 as compared with the correlation value between the two variables of the variable of interest L and the explanatory variable Xn1. As shown in the above Expression (3), in the case of a combination of two important variable candidates, the first index J of the combining effect is a conditional mutual information amount.

The first index J may be calculated as in Expression (4).$J = I \left(L;Xn2| Xn 1\right) - I \left(L;Xn2\right)$

According to the above Expression (4), the first index J of the combining effect is a value obtained by subtracting the correlation amount between the two variables of the variable of interest L and the newly added explanatory variable Xn2 from the value shown in the above Expression (3).

The first information may be calculated as in Expressions (5) to (7) as a second index averaged conditional mutual information (ACMI) instead of the first index J.$H \left(L| {X}_{n 1}\right) - H \left(L| {X}_{n 1} , {X}_{n 2}\right) = I \left(L, | {X}_{n 2} , {X}_{n 1}\right)$ $H \left(L| {X}_{n 2}\right) - H \left(L| {X}_{n 2} , {X}_{n 1}\right) = I \left(L;{X}_{n 1}| {X}_{n 2}\right)$ $ACMI = \frac{1}{2} \left\{I\left(L;{X}_{n 2}| {X}_{n 1}\right)+I\left(L;{X}_{n 1}| {X}_{n 2}\right)\right\}$

As described above, I(L;Xn2|Xn1) is a mutual information amount of L and Xn2 with Xn1 as a condition. In addition, I(L;Xn1|Xn2) is a mutual information amount of L and Xn1 with Xn2 as a condition. The second index ACMI is an average value of these conditional mutual information amounts.

Note that the second index ACMI indicates the average contribution of the important variable candidates Xn1 and Xn2 to the variable of interest L. The contribution for each instance can be represented by a third index CE shown in Equation (8).$CE : \left|log\left\{\frac{P \left(l,{x}_{n 2}| {x}_{n 1}\right) P \left(l,{x}_{1}| {x}_{n 2}\right)}{P \left(l| {x}_{n 1}\right) P \left({x}_{n 2}| {x}_{n 1}\right) P \left(l| {x}_{n 2}\right) P \left({x}_{n 1}| {x}_{n 2}\right)}\right\}\right|$

The combination of the three important variable candidates Xn1, Xn2, and Xn3 and the second index ACMI of the combining effect in the objective variable L can be calculated as in Equations (9) to (12).$H \left(L| {X}_{n 1}\right) - H \left(L| {X}_{n 1} , {X}_{n 2} , {X}_{n 3}\right) = I \left(L;{X}_{n 2}{X}_{n 3}| {X}_{n 1}\right)$ $H \left(L| {X}_{n 2}\right) - H \left(L| {X}_{n 2} , {X}_{n 3} , {X}_{n 1}\right) = I \left(L;{X}_{n 3}{X}_{n 1}| {X}_{n 2}\right)$ $H \left(L| {X}_{n 3}\right) - H \left(L| {X}_{n 3} , {X}_{n 1} , {X}_{n 2}\right) = I \left(L;{X}_{n 1}{X}_{n 2}| {X}_{n 3}\right)$ $ACMI = \frac{1}{3} \left\{I\left(L;{X}_{n 2}{X}_{n 3}| {X}_{n 1}\right)+I\left(L;{X}_{n 3}{X}_{n 1}| {X}_{n 2}\right)+I\left(L;{X}_{n 1}{X}_{n 2}| {X}_{n 3}\right)\right\}$

The selection unit 133 selects the important variable candidates included in the S combinations in descending order of the calculated first information (for example, the second index ACMI) as the important variables.

As described above, the selection unit 133 calculates the first information using the factor (input variable) group {Xmj} directly connected to the hidden node Lm by the network of the causal model as the important variable candidate.

This is based on the property of entropy represented by Expression (13) and the conditional independence of the causal model (graphical model). That is, it is clear that the first information calculated from the combination of the factor groups not directly connected to the hidden node Lm by the network of the causal model is smaller than the first information calculated from the combination of the factor groups {Xmj}.$H \left({X}_{n 1}\right) \geq H \left({X}_{n 1}| \left\{L\right\}\right)$

Therefore, the information processing apparatus 100 only needs to calculate the first information using the factor (input variable) group {Xmj} directly connected to the hidden node Lm by the network of the causal model as the important variable candidate, and can reduce the number of variables for calculating the first information.

### (Evaluation Unit 134)

The evaluation unit 134 evaluates the influence degree of the important variable selected by the selection unit 133 on the objective variable (variable of interest). When the variable of interest is the hidden node Lm, the evaluation unit 134 can calculate the influence degree of the important variable on the hidden node Lm. Alternatively, the evaluation unit 134 can calculate the influence degree of the important variable on the output variable Y directly connected to the hidden node Lm. The influence degree is an example of strength information indicating the strength of the relationship between the variable of interest and the important variable.

When a factor group {Xmj} directly connected to the hidden node Lm is treated as a numerical variable, the hidden node Lm can be expressed as shown in Expression (14) as a causal regression formula (structural formula) in which partial correlation is considered.${L}_{m} = {\sum }_{k} \left({α}_{mj}{X}_{mj}+{β}_{m}\right)$

Note that αmj is calculated as a regression coefficient. In addition, βm is a constant at the hidden node Lm.

Alternatively, when the factor group {Xmj} is treated as a categorical variable, the hidden node Lm can be expressed as a conditional probability distribution as shown in Expression (15). Note that ωmlm represents the weight of the neuron.$Prob \left({L}_{m}| \left\{{X}_{mj}\right\}\right)$

Note that the output variable Y is calculated based on Expressions (16) and (17). Note that the filter function is included inside. Furthermore, the factor group {Xmj} is used here as a numerical variable.$y = {\sum }_{i} \left({ω}_{m}{l}_{m}\right) + {l}_{0}$ ${l}_{m} = {\sum }_{k} \left({α}_{mj}{x}_{mj}+{β}_{m}\right)$

The influence degree of the important variable Xj can be calculated as a weight for the important variable Xj. The weight for the important variable Xj can be expressed as shown in the following Expression (18). As described above, αmj is calculated as a regression coefficient.${\sum }_{m} \left({ω}_{m}{α}_{mj}\right)$

Here, the evaluation unit 134 can calculate a complex influence degree. The complex influence degree corresponds to the above-described combining effect. For example, the evaluation unit 134 calculates a complex influence degree of the important variables Xn1 and Xn2 based on the following Expression (19). ${\sum }_{m = 1}^{5} {w}_{m} {n}_{m} \left(x\right) \times CE \left({x}_{n 1}, {x}_{n 2}\right) + {n}_{0}$

Wherein, CE(xn1, xn2) is the third index CE shown in Expression (8), and nm (x) is a value of the hidden node Lm of the neural network and is a value determined by the entire input variables. In addition, n0 is a constant. In Expression (19), the neural network illustrated in FIG. 2, that is, the case of m = 1 to 5 is illustrated as an example.

Note that, in addition to the influence degree described above, the evaluation unit 134 may evaluate the degree of partial correlation between the important variable and the variable of interest as a basis that the important variable and the variable of interest are not pseudo-correlated. For example, the evaluation unit 134 can examine the partial correlation by calculating the p value of the conditional independence test as the degree of partial correlation between the important variable and the variable of interest. That is, the evaluation unit 134 can calculate the p value as the strength information described above.

Alternatively, the evaluation unit 134 can calculate the conditional probability of the important variable of each nearest node group for each instance. This can be presented to the user as an analysis result of the neural network itself, for example, as a reason for the output (prediction) result. Such a point will be described later in an application example.

The important variable selected by the selection unit 133 and the influence degree calculated by the evaluation unit 134 are presented to the user by the input and output control unit 131, for example. For example, the input and output control unit 131 combines the selected important variable and the influence degree to present to the user. In a case where there is a plurality of important variables, the input and output control unit 131 presents a list to the user in descending order of the influence degree, for example. Furthermore, in a case where a combination of a plurality of important variables is presented to the user as a reason of the prediction result, the input and output control unit 131 displays the combination of the plurality of important variables and the complex influence degree in the combination to the user in association with each other. Note that a specific presentation example will be described later in an application example.

### (Intervention Effect Calculation Unit 135)

The intervention effect calculation unit 135 calculates an intervention effect that occurs in the objective variable by intervening in the important variable selected by the selection unit 133. The objective variable here may be a nearest node group or an output variable. The intervention effect calculation unit 135 can calculate an intervention effect of at least one of the nearest node group and the output variable.

The intervention effect calculation unit 135 intentionally changes the value of the important variable (intervenes in the important variable) to calculate the causal influence exerted on the objective variable.

For example, the input and output control unit 131 presents the intervention effect calculated by the intervention effect calculation unit 135 to the user in association with the intervened important variable. The input and output control unit 131 presents the intervention effect to the user together with the evaluation result of the evaluation unit 134. Alternatively, the input and output control unit 131 may present the intervention effect to the user in accordance with an instruction from the user. In this case, for example, when the user selects the important variable presented by the input and output control unit 131, the intervention effect calculation unit 135 calculates the intervention effect of the selected important variable, and the input and output control unit 131 presents the calculation result.

Note that, although the intervention effect calculation unit 135 of the information processing apparatus 100 calculates the intervention effect of the important variable here, the present invention is not limited thereto. For example, the information processing apparatus 100 may select an important variable and present the important variable, and another apparatus may calculate the intervention effect. As described above, in a case where the information processing apparatus 100 does not calculate the intervention effect, the intervention effect calculation unit 135 illustrated in FIG. 1 can be omitted.

### <<3. Analysis Processing>>

FIG. 4 is a flowchart illustrating a flow of prediction model analysis processing executed by the information processing apparatus 100 according to the embodiment of the present disclosure.

As illustrated in FIG. 4, the causal model estimation unit 132 of the information processing apparatus 100 acquires a prediction model to be analyzed (step S101).

Next, the causal model estimation unit 132 estimates a causal model for each node of the nearest node group (step S102).

The selection unit 133 selects an important variable from input variables closest to the variable of interest of each causal model estimated by the causal model estimation unit 132, in other words, directly connected in the network (step S103).

The evaluation unit 134 evaluates the influence degree of the important variable on the variable of interest with respect to the important variable selected by the selection unit 133 (step S104). At this time, for a combination of a plurality of important variables, the evaluation unit 134 can evaluate a complex influence degree (combining effect) of the combination on the variable of interest.

The input and output control unit 131 outputs information on the important variable selected by the selection unit 133 (step S105). At this time, the input and output control unit 131 may output the information on the important variable in association with the information on the influence degree evaluated by the evaluation unit 134 and the information on the intervention effect in the case of intervening in the important variable. Note that the intervention effect is calculated by the intervention effect calculation unit 135.

### <<4. Application Example>>

### <4.1. Application Example to Data Analysis System for Manufacturing System>

In a manufacturing factory of a certain product, information is acquired by a large number of measuring devices and sensors. For example, various physical quantities such as an outdoor temperature, a room temperature, and a humidity of a manufacturing factory, and a voltage, a current, electric power, and a vibration waveform indicating a state when the device is used are measured and stored in, for example, a database in association with time. In this manner, the large number of measuring devices and sensors acquire information regarding the operating environment or the operating state of the device.

In addition, it is assumed that the presence or absence of the abnormality occurrence in the manufacturing factory is stored, and a prediction model for predicting the abnormality occurrence in the manufacturing factory using the presence or absence of the abnormality occurrence as supervision and the acquired information as input data is constructed as, for example, a neural network. In a data analysis system, abnormality occurrence is predicted by the prediction model. In a conventional data analysis system, only a prediction result by a prediction model is displayed, and it is difficult for a user to know a reason of the prediction result.

Therefore, by applying the information processing apparatus 100 according to the proposed technology to the data analysis system, the data analysis system can present the reason for the prediction to the user for the prediction result.

First, the information processing apparatus 100 generates a causal model for a prediction model that has already been constructed. Here, it is assumed that a causal model is generated for an output variable indicating the presence or absence of abnormality occurrence.

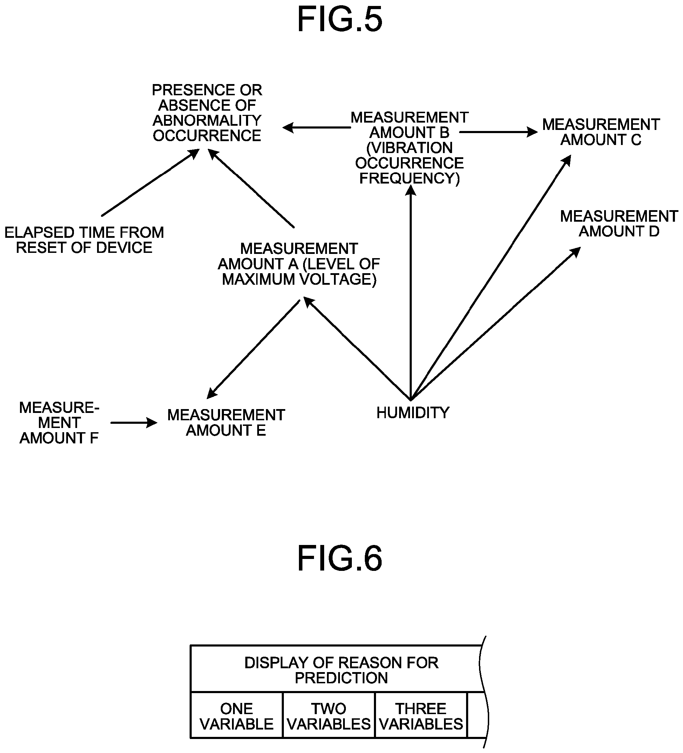

FIG. 5 is a diagram illustrating an example of a causal model estimated by the information processing apparatus 100 according to the application example of the embodiment of the present disclosure.

For example, the causal model estimation unit 132 of the information processing apparatus 100 estimates that three including a measurement amount A indicating the level of the maximum voltage in past one day, an elapsed time from the reset of a device A, and a measurement amount B indicating the vibration occurrence frequency have a direct causal relationship with the presence or absence of abnormality occurrence which is the output.

Here, it is assumed that the measurement amount B is a single cause for the presence or absence of abnormality occurrence. Note that the measurement amount A is not a cause by itself, and the abnormality is assumed to occur only when the level of maximum voltage is at the high level among the three levels (high, middle, low) and the elapsed time from the reset is equal to or longer than YY hours.

In addition, the measurement amounts A and B change depending on humidity. Note that, in the factory, measures for removing the influence of humidity are not taken, and the data analysis system also acquires information regarding measurement amounts C and D affected by humidity, but the measurement amounts C and D do not affect the output (presence or absence of abnormality occurrence).

In addition, the data analysis system acquires information on a measurement amount F and a measurement amount E that varies under the influence of the measurement amount F and the measurement amount A.

As illustrated in FIG. 5, when the causal model estimation unit 132 estimates the causal relationship of the prediction model, in addition to the measurement amounts A and B that are independent causes for the presence or absence of abnormality occurrence, and the elapsed time from the reset of the device A, the humidity and the measurement amounts C, D, and E are also estimated to have a correlation with the output.

Therefore, for example, in a system that outputs a reason of a prediction result based on a correlation, there is a possibility that humidity or measurement amounts C, D, and E having a low causal relationship with respect to the presence or absence of abnormality occurrence are presented as a reason for an output result.

For example, even if the user performs the intervention on the humidity and the measurement amounts C, D, and E based on the presented information, there is a possibility that the effect of the intervention cannot be obtained. Alternatively, even if the user does not intervene, there is a possibility that erroneous knowledge that the presented information is a cause of the abnormality occurrence is accumulated, and there is a possibility that the grasping of the manufacturing process by the user is hindered.

On the other hand, in the proposed technology, the information processing apparatus 100 presents the reason to the user using the cause (input variable) estimated to be close to be true for the objective variable (output here). Therefore, the information processing apparatus 100 can present a more appropriate input variable as a reason. As a result, the information processing apparatus 100 can present a reason with a higher intervention effect to the user, and can suppress accumulation of erroneous knowledge by the user.

Furthermore, in the proposed technology, the information processing apparatus 100 can combine a plurality of input variables to present to the user as a reason (composite effect) for the objective variable. The information processing apparatus 100 does not calculate the effects of the plurality of input variables by adding the effects of the input variables alone, but calculates the effects (combining effects) according to the combined state by the combination. Therefore, the information processing apparatus 100 can present a more appropriate combination of input variables as a reason for the prediction result to the user.

Hereinafter, an example of analysis processing by a data analysis system according to an application example of the embodiment of the present disclosure will be described with reference to FIGS. 6 to 8.

Note that the reason for the prediction result can be presented to the user at the same time as the prediction result. Therefore, here, at the same time as the data analysis system presents the prediction result, the information processing apparatus 100 presents the reason for the prediction to the user using, for example, a pop-up.

Note that the prediction by the prediction model may be performed by, for example, a prediction device (not illustrated) included in the data analysis system, and the prediction result may be displayed on a display device (not illustrated) by the prediction device. At this time, the information processing apparatus 100 can present the information regarding the input variable selected as the reason for the prediction result so that the user can check both the prediction result and the reason.

As described above, the information processing apparatus 100 may present a plurality of input variables as reasons. At this time, the information processing apparatus 100 may calculate the combining effect by combining a predetermined number of input variables, or may receive the number of input variables to be combined from the user.

FIG. 6 is a diagram illustrating an example of a UI screen output by the information processing apparatus 100 according to the application example of the embodiment of the present disclosure.

For example, the information processing apparatus 100 presents candidates of the number of input variables to be combined to the user by displaying the UI screen illustrated in FIG. 6. In FIG. 6, the number of variables that can be selected by the user is one variable to three variables, but the number of variables that can be selected as a combination may be four or more.

For example, the user selects the number of input variables to be combined by clicking the corresponding location on the UI screen. In this manner, the information processing apparatus 100 outputs the UI screen (interface) for determining the combination of the input variables, and the user performs an operation corresponding to the UI screen (interface). The information processing apparatus 100 determines combinations of input variables of the number selected by the user based on the operation. The information processing apparatus 100 selects the display of the reason for the determined combination and calculates the influence degree of the combination. The information processing apparatus 100 combines the combination of the selected input variables and the influence degree to present to the user together with the prediction result.

First, a case where the user selects one variable will be described.

For example, in the estimated causal model (see FIG. 5), the information processing apparatus 100 selects three input variables (the measurement amount A indicating level of maximum voltage in past one day, the elapsed time from reset of device A, and the measurement amount B indicating the vibration occurrence frequency) directly connected to the presence or absence of abnormality occurrence, which is an output variable, as important variables and calculates the influence degree.

The information processing apparatus 100 presents the information regarding the important variable and the calculated influence degree to the user in association with each other.

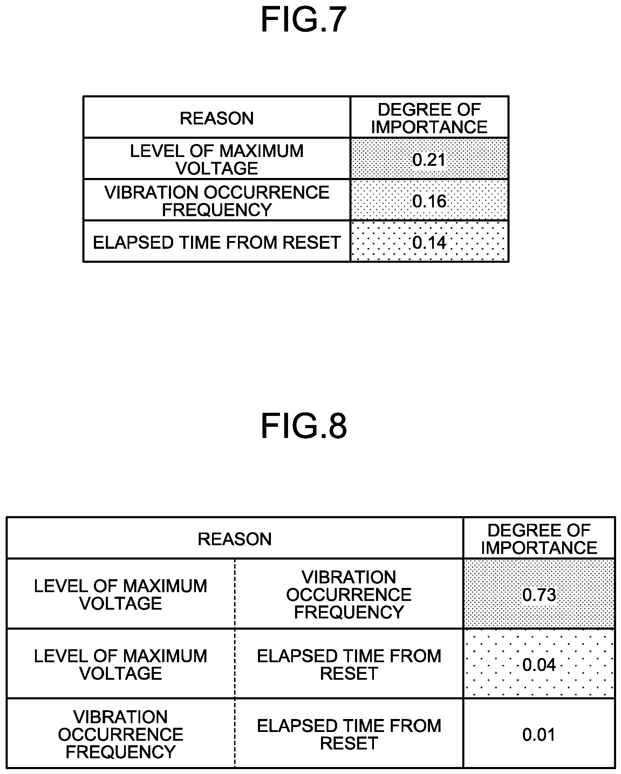

FIG. 7 is a diagram illustrating an example of a UI screen output by the information processing apparatus 100 according to the application example of the embodiment of the present disclosure. FIG. 7 illustrates an example of a UI screen output by the information processing apparatus 100 in a case where the user selects one variable. Note that the degree of importance illustrated in FIG. 7 corresponds to the influence degree described above.

For example, the information processing apparatus 100 presents information regarding the important variable to the user by sorting in descending order of the degree of importance. In the example of FIG. 7, the information processing apparatus 100 displays the measurement amount A having the highest degree of importance "0.21" as the "level of maximum voltage" and the measurement amount B having the second highest degree of importance "0.16" as the "vibration occurrence frequency". Furthermore, the information processing apparatus 100 displays, as "elapsed time from reset", the elapsed time from the reset of the device A having "0.14", which is the third highest degree of importance.

As described above, the information processing apparatus 100 displays the important variables and the degree of importance in association with each other in a list in descending order of the degree of importance, so that the reason for the prediction result can be presented to the user in an easy-to-understand manner. At this time, the information processing apparatus 100 can present a more convincing reason to the user by presenting the strength of the causal relationship with the output variable to the user using a quantitative index such as the degree of importance.

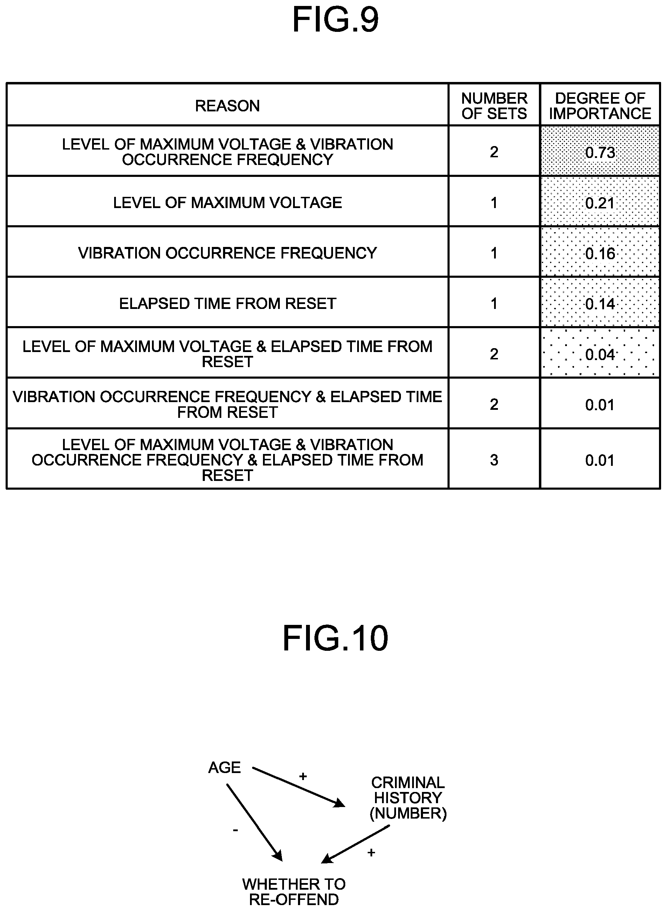

Note that, as illustrated in FIG. 7, the information processing apparatus 100 may display a list by changing the background color of the table according to the magnitude (absolute value) of the degree of importance. For example, the information processing apparatus 100 selects a darker background color and displays a list as the degree of importance is higher. As described above, the information processing apparatus 100 determines the order and color on the display screen corresponding to the degree of importance, so that the user can more easily recognize the degree of importance of the important variable. The same applies to FIGS. 8 and 9 described later.

First, a case where the user selects two variables will be described.

For example, in the estimated causal model (see FIG. 5), the information processing apparatus 100 selects a combination in which two are selected from three input variables (the measurement amount A indicating level of maximum voltage in past one day, the elapsed time from the reset of device A, and the measurement amount B indicating the vibration occurrence frequency) directly connected to the presence or absence of abnormality occurrence, which is an output variable, as a combination of important variables.

The information processing apparatus 100 calculates a complex influence degree by the selected combination of the important variables. The information processing apparatus 100 presents the information regarding the combination of the important variables and the calculated complex influence degree to the user in association with each other.

FIG. 8 is a diagram illustrating an example of a UI screen output by the information processing apparatus 100 according to the application example of the embodiment of the present disclosure. FIG. 8 illustrates an example of a UI screen output by the information processing apparatus 100 in a case where the user selects two variables. Note that the degree of importance illustrated in FIG. 8 corresponds to the complex influence degree described above.

For example, the information processing apparatus 100 presents information regarding the important variable to the user by sorting in descending order of the degree of importance. In the example of FIG. 8, since the degree of importance of the combination of the measurement amounts A and B is "0.73" which is the highest, the information processing apparatus 100 displays the information "level of maximum voltage" and "vibration occurrence frequency" regarding the combination of the measurement amounts A and B as the reason of the prediction result in association with the degree of importance.

Further, the degree of importance of the combination of the measurement amount A and the elapsed time from the reset of the device A is "0.04", which is the second highest. Therefore, the information processing apparatus 100 displays the information "level of maximum voltage" and "elapsed time from reset" regarding the combination of the measurement amount A and the elapsed time from the reset of the device A as the reason of the prediction result in association with the degree of importance.

Further, the degree of importance of the combination of the measurement amount B and the elapsed time from the reset of the device A is "0.01", which is the third highest. Therefore, the information processing apparatus 100 displays the information "vibration occurrence frequency" and "elapsed time from reset" regarding the combination of the measurement amount B and the elapsed time from the reset of the device A as the reason of the prediction result in association with the degree of importance.

At this time, the information processing apparatus 100 does not calculate the complex degree of importance by simply adding the degree of importance in the case of one variable, but calculates the composite degree of importance in consideration of the pseudo correlation. Therefore, the information processing apparatus 100 can present a more appropriate degree of importance to the user even in a case where two variables are combined as a reason.

Note that, here, it is assumed that the number of input variables directly connected to the output variable in the causal graph is three, and the information processing apparatus 100 selects all the three input variables as the important variables, but the present invention is not limited thereto. For example, in a case where the number of input variables directly connected to the objective variable in the causal graph is large, the information processing apparatus 100 may limit the number of input variables selected as the important variable or the number of input variables selected as the combination of the important variables using the above-described first information or the like.

Furthermore, in the above-described example, a case where the information processing apparatus 100 presents a combination of a fixed number of variables to the user as a reason has been described, but the present invention is not limited thereto. For example, by newly defining a complex influence degree capable of performing relative comparison as a uniform index, the information processing apparatus 100 can relatively compare complex influence degrees in a case where different numbers of variables are combined. As a result, the information processing apparatus 100 can present a combination of different numbers of variables to the user as a reason.

For example, the information processing apparatus 100 calculates the following Expressions (20) to (22) as a fourth index CEp instead of the third index CE of Expression (8) as the uniform first information not depending on the number of variables to be combined. Note that p represents the number of variables included in the combination, l represents an instance of the objective variable, and xn1 to xn3 represent a category value of an instance of the input variable included in the combination.${CE}_{1} : = log \frac{P \left(l| {x}_{n 1}\right)}{P \left(l\right)}$ ${CE}_{2} : = log \frac{P \left(l| {x}_{n 1} , {x}_{n 2}\right)}{P \left(l\right)}$ ${CE}_{3} : = log \frac{P \left(l| {x}_{n 1} , {x}_{n 2} , {x}_{n 3}\right)}{P \left(l\right)}$

Furthermore, in this case, the information processing apparatus 100 can calculate the following Expressions (23) to (25) as a fifth index ANCIp instead of the second index ANCI of Expression (7) as the uniform first information not depending on the number of variables to be combined.$H \left(L\right) - H \left(L| {X}_{n 1}\right)$ $H \left(L\right) - H \left(L| {X}_{n 1} , {X}_{n 2}\right)$ $H \left(L\right) - H \left(L| {X}_{n 1} , {X}_{n 2} , {X}_{n 3}\right)$

Note that p represents the number of variables included in the combination, L represents the objective variable, and Xn1 to Xn3 represent the input variables included in the combination.

Note that, here, an example of the fourth index CEp and the fifth index ANCIp in a case where the number P of variables to be combined is P = 1 to 3 is illustrated; however, the number of variables to be combined is not limited to 1 to 3, and may be four or more.

In this manner, the information processing apparatus 100 can present a combination of a predetermined number or less of variables to the user as a reason by using a uniform index that does not depend on the variables to be combined.

This point will be described in an example of the above-described data analysis system. Here, a case where the information processing apparatus 100 presents a combination of three or less input variables as a reason will be described. Note that the maximum value of the input variables to be combined may be designated by the user or may be determined by the information processing apparatus 100.

For example, in the estimated causal model (see FIG. 5), the information processing apparatus 100 selects one to three input variables from three input variables (the measurement amount A indicating level of maximum voltage in past one day, the elapsed time from reset of device A, and the measurement amount B indicating the vibration occurrence frequency) directly connected to the presence or absence of abnormality occurrence, which is an output variable, and sets the combination of the selected input variables as a combination of important variables.

The information processing apparatus 100 calculates a complex influence degree by the combination of the important variables selected using the above Expressions (20) to (22). The information processing apparatus 100 presents the information regarding the combination of the important variables and the calculated complex influence degree to the user in association with each other.

FIG. 9 is a diagram illustrating an example of a UI screen output by the information processing apparatus 100 according to the application example of the embodiment of the present disclosure. FIG. 9 illustrates an example of a UI screen output by the information processing apparatus 100 in a case where three or less variables are combined. Note that the degree of importance illustrated in FIG. 9 corresponds to the complex influence degree described above.

For example, the information processing apparatus 100 presents information regarding the important variable to the user by sorting in descending order of the degree of importance. In the example of FIG. 9, since the degree of importance of the combination of the measurement amounts A and B is "0.73" which is the highest, the information processing apparatus 100 displays the information "level of maximum voltage" and "vibration occurrence frequency" regarding the combination of the measurement amounts A and B as the reason of the prediction result in association with the degree of importance. Furthermore, the information processing apparatus 100 presents the number of important variables included in the combination to the user as the number of sets.

In addition, the degree of importance of the measurement amount A is "0.21", which is the second highest. Therefore, the information processing apparatus 100 displays the information "level of maximum voltage" regarding the measurement amount A as the reason of the prediction result in association with the number of important variables (the number of sets) "1" and the degree of importance "0.21" included in the combination.

As illustrated in FIG. 9, the degree of importance of the combination of the measurement amounts A and B and the elapsed time from the reset of the device A is "0.01". Therefore, the information processing apparatus 100 displays the information "level of maximum voltage", "vibration occurrence frequency", and "elapsed time from reset" regarding the combination of the measurement amounts A and B and the elapsed time from the reset of the device A as the reason of the prediction result in association with the number of sets "3" and the degree of importance.

As described above, the information processing apparatus 100 sets the index that can be uniformly compared regardless of the number of important variables included in the combination as the first information, so that the combination including the different number of important variables can be presented to the user as the reason.

Note that, if the number of important variables included in the combination is variable, the number of combinations for calculating the degree of importance (influence degree) increases, and the processing load of the information processing apparatus 100 may increase. In that case, the information processing apparatus 100 can suppress an increase in the processing load by selecting the number of important variables to be combined based on Expressions (23) to (25) described above.

As described above, the information processing apparatus 100 according to the embodiment of the present disclosure includes the intervention effect calculation unit 135 (see FIG. 1) and has a function of calculating an intervention effect.

Therefore, for example, by the user selecting one of the presented reasons from the list, the information processing apparatus 100 may calculate an effect in a case of intervening in the input variable included in the selected reason and present the effect to the user. In this case, for example, a specific intervention pattern for the input variable selected by the user may be instructed.

For example, in the data analysis system described above, it is assumed that the reason for the prediction result is the elapsed time from the reset of the device A. As a result, the user can understand that it is predicted that the abnormality is highly likely to occur since the elapsed time from the reset of the device A is long. Therefore, the user can know how much intervention effect can be obtained by intervening in the elapsed time by using the function of calculating the intervention effect of the information processing apparatus 100. At this time, for example, the user can cause the information processing apparatus 100 to calculate how much intervention effect, that is, the abnormality occurrence probability is reduced by shortening the time interval for resetting the device A by 15 minutes.

As described above, the information processing apparatus 100 presents the reason for the prediction result to the user, so that the user can examine a specific intervention pattern. Furthermore, the information processing apparatus 100 calculates the effect of the intervention pattern considered by the user, so that the user can determine whether or not to execute the intervention by considering the balance between the intervention effect and the cost for executing the intervention.

### <4.2. Application Example to Recidivism Determination System>

For example, a case where the proposed technology is applied to a recidivism determination system that determines whether or not a certain person performs re-offending based on data of the certain person will be described.

In the recidivism determination system, for example, the age and history (for example, the criminal record (number), the period of detention, and the like) of the person are used as inputs to determine whether or not the person performs re-offending.

FIG. 10 is a diagram illustrating a causal relationship of a prediction model of the recidivism determination system. Whether or not a certain person repeats a crime may have a causal relationship as illustrated in FIG. 10.

As illustrated in FIG. 10, it is considered that there is a negative correlation between the age and the presence or absence of re-offending with respect to whether or not to re-offend (hereinafter, it is also described as the presence or absence of re-offending). That is, it is considered that the possibility of re-offending is lower as the age is higher, and the possibility of re-offending is higher as the age is lower.

In addition, it is considered that there is a positive correlation between the criminal history (the number of crimes) and the presence or absence of re-offending. That is, it is considered that the possibility of re-offending is higher as the number of criminal histories increases.

It is considered that there is a positive correlation between the criminal history and the age. That is, it is considered that the number of criminal histories increases as the age is higher.

Therefore, age plays a role called interlacement, and generates bias. Therefore, since there is a possibility that the presence or absence of re-offending and the criminal history have a pseudo correlation relationship, it is desirable to estimate the correlation between the presence or absence of re-offending and the criminal history by removing the influence of age. The influence of age is expressed by a magnitude of partial correlation or a conditional mutual information amount. For example, by using the p value of the statistical test as an index to determine whether the partial correlation coefficient can be regarded as 0, the information processing apparatus 100 can generate the causal model excluding the pseudo correlation. That is, the information processing apparatus 100 generates the causal model using the input variable having the partial correlation coefficient that is not 0 or not conditionally independent with respect to the output variable as the input variable having the causal relationship with the output variable.

Here, it is assumed that the prediction model included in the recidivism determination system described above is constructed as a neural network having five nearest node groups (L1 to L5).

The information processing apparatus 100 estimates a causal model for each of the nearest nodes L1 to L5 of the prediction model. The information processing apparatus 100 estimates a causal model in which each of the nearest nodes L1 to L5 is associated with age, a criminal history (number), a detention period, or the like.

The information processing apparatus 100 presents the reason together with the prediction result of re-offending based on the estimated causal model.

Furthermore, when estimating the reason using the causal model of the nearest node, the information processing apparatus 100 may calculate the probabilities of the levels of the nearest nodes L1 to L5 and present the probabilities to the user.

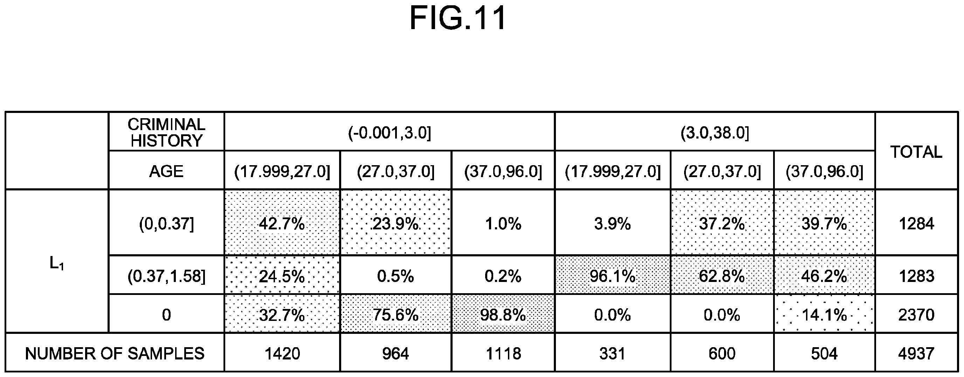

FIG. 11 is a table illustrating a conditional probability of the level of the nearest node L1 calculated by the information processing apparatus 100 according to the embodiment of the present disclosure.

In FIG. 11, the information processing apparatus 100 calculates the conditional probability by dividing the criminal history into two with three cases as threshold values and dividing the age into three with 27 years old and 37 years old as threshold values. Furthermore, the information processing apparatus 100 calculates the conditional probability by dividing the level of L1 into three levels (high, middle, low) using 0.37 and 1.578 as threshold values.

For example, it is assumed that the recidivism determination system predicts the possibility of the presence or absence of re-offending by a certain person (instance) using a prediction model. In a case where the number of the criminal histories of the person to be predicted is five, the number of the criminal histories is three or more, and thus, the average probability that the nearest node L1 becomes the high level is 30.4%. This probability is distributed from 3.9% to 39.7% depending on age, and the probability varies depending on age. In a case where the age of the person to be predicted is 61 years old, the probability that the nearest node L1 becomes the high level is 39.7%. On the other hand, focusing only on age, the average of the probability that the nearest node L1 becomes the high level at age 61 is 13%. In this way, when focusing only on age, the probability that the nearest node L1 becomes the high level greatly decreases as compared with the case of considering the re-offending history.

In this way, the plurality of input variables affect the objective variable (here, the nearest node) in a complex manner. The information processing apparatus 100 can present the plurality of input variables to the user as a reason affecting the objective variable.

In particular, in a case where there is a nonlinear relationship between the input variable and the objective variable, a case where a combination of specific input variables largely affects the objective variable, or the like, the information processing apparatus 100 can present a more appropriate reason to the user by calculating a complex influence degree.

As described above, the information processing apparatus 100 calculates the probabilities of the levels of the nearest nodes L1 to L5 and presents the probabilities to the user, so that the user can check the input variables that affect the nearest nodes L1 to L5. As a result, the user can more easily analyze the prediction model.

Like the criminal history described above, the input variable may include a variable that has a positive correlation with the output variable, that is, a positive reason for supporting the output of the final prediction result. In addition, like the age described above, the input variable may include a variable having a negative correlation with the output variable, that is, a negative reason for supporting the output of the final prediction result.

Therefore, the information processing apparatus 100 may separately present the important variable serving as the positive reason and the important variable serving as the negative reason to the user as the reason for the prediction result. That is, the information processing apparatus 100 may calculate each of a complex influence degree by a combination of input variables having a positive correlation with an output variable (or an objective variable) and a complex influence degree by a combination of input variables having a negative correlation.

More specifically, for example, in a case where the prediction model is a neural network that performs binary classification and identification, positive and negative numerical values are given to the weight w of each node (neuron). Neurons that fire and attract are determined in advance by training such that a positive numerical value selects one of the binary values and a negative numerical value selects the other.

For a specific one-time prediction, each neuron is divided into neurons that attract output in a positive direction and neurons that attract output in a negative direction. Therefore, the information processing apparatus 100 can calculate the weighting of the reason for each of the positive and negative. For example, the binary values output by the final output Y are "1" and "0". In the case of the recidivism determination system, for example, "presence of re-offending" can correspond to "1", and "absence of re-offending" can correspond to "0". In this case, the information processing apparatus 100 calculates the weight of the input variable to be drawn to the Y = 1 side, that is, the final output Y of 1 by using Expression (26). Furthermore, the information processing apparatus 100 calculates the weight of the input variable to be drawn to the Y = 0 side, that is, the final output Y of 0 by using Expression (27).${\sum }_{{n}_{m} ∈ Pos} {w}_{m} {n}_{m} \left(x\right) \times CE + {n}_{0}$ ${\sum }_{{n}_{m} ∈ Neg} {w}_{m} {n}_{m} \left(x\right) \times CE + {n}_{0}$

Note that Pos illustrated in Expression (26) represents a set of nearest nodes (last layer neurons) having a positive weight w, and Neg illustrated in Expression (27) represents a set of nearest nodes having a negative weight w. The information processing apparatus 100 can use Expression (26) to evaluate the variable of the reason for attracting in the positive direction or a combination thereof. The information processing apparatus 100 can similarly use Expression (27) for the negative direction.

The information processing apparatus 100 can quantify and evaluate the weight as the reason for the important variable or the combination of the important variables by calculating the sum of Expressions (26) and (27) as the influence degree EP as illustrated in Expression (28). $EP : = {\sum }_{{n}_{m} ∈ Pos} {w}_{m} {n}_{m} \left(x\right) \times CE + {n}_{0} + {\sum }_{{n}_{m} ∈ Neg} {w}_{m} {n}_{m} \left(x\right) \times CE + {n}_{0}$

The influence degree EP can be calculated as a positive value or a negative value. Therefore, the information processing apparatus 100 can present each of the reason for attracting the final output Y in the positive direction (important variable) and the reason for attracting the final output Y in the negative direction (important variable) to the user.

### <<5. Other Embodiments>>

In the above-described embodiment, the case where the prediction model is a neural network has been described, but the present invention is not limited thereto. The prediction model for which the information processing apparatus 100 gives a reason may be a machine learning system other than the neural network.

For example, in a case where the prediction model is a random forest, the information processing apparatus 100 estimates one causal model to be a cause of the output variable in order to search for an input variable explaining the output variable. That is, the information processing apparatus 100 estimates the causal model using the output variable as the objective variable, and selects the important variable. Note that the processing performed by the information processing apparatus 100 is the same as the processing illustrated in FIG. 4 except that the output variable is used as the objective variable.

As described above, the information processing apparatus 100 is not limited to the neural network, and can present the reason for the prediction result of the prediction model generated by the machine learning to the user.

Furthermore, in the above-described embodiment, the information processing apparatus 100 presents the important variable having a high influence degree to the user, but the present invention is not limited thereto. For example, the information processing apparatus 100 may present an important variable with a low influence degree to the user. The information processing apparatus 100 outputs an input variable having a pseudo correlation with the variable of interest as an input variable that does not affect the variable of interest. Alternatively, the information processing apparatus 100 may output an input variable that is conditionally independent of the variable of interest.

In this manner, the information processing apparatus 100 presents the input variable having a low influence degree with respect to the variable of interest, for example, having a pseudo correlation with the variable of interest, to the user, so that the user can know the input variable that does not affect the prediction result.

### <<6. Modification>>

In the embodiment described above, the information processing apparatus 100 determines whether each input variable is conditionally independent of the output variable, selects the input variable determined not to be conditionally independent as the important variable, and outputs the selected input variable, but the present invention is not limited thereto. The information processing apparatus 100 may determine whether each input variable is conditionally independent (pseudo correlation relationship) with respect to the output variable, select one or both of the input variable determined not to be conditionally independent and the input variable determined to be conditionally independent, and output the selected input variable.

Specifically, for example, the selection unit 133 identifies an input variable that is conditionally independent of the output variable and an input variable that is not conditionally independent of the output variable based on the causal model estimated by the causal model estimation unit 132, and selects a variable for explaining the hidden node Lm from among the identified input variables. Here, the selection unit 133 may select both the input variable determined not to be conditionally independent of the output variable and the input variable determined to be conditionally independent of the output variable. For example, the selection unit 133 can distinguish and select whether each input variable is conditionally independent or not conditionally independent of the output variable.

The evaluation unit 134 evaluates the influence degree of the selected variable selected by the selection unit 133 on the objective variable (variable of interest). Further, the input variable selected by the selection unit 133 and the influence degree calculated by the evaluation unit 134 are presented to the user by the input and output control unit 131, for example. Here, the input and output control unit 131 may distinguish whether the selected variable selected by the selection unit 133 is conditionally independent or not conditionally independent of the output variable and present it to the user.

The intervention effect calculation unit 135 calculates an intervention effect caused in the objective variable by intervening in the input variable determined not to be conditionally independent of the output variable among the input variables selected by the selection unit 133.

The identification of the input variable that is conditionally independent of the output variable and the input variable that is not conditionally independent of the output variable may be performed by the statistical test regarding the correlation or partial correlation or the calculation of the statistic regarding the correlation or partial correlation by the causal model estimation unit 132. In addition, the identification of the input variable that is conditionally independent of the output variable and the input variable that is not conditionally independent of the output variable may be performed by the statistical test regarding the independence or the conditional independence or the calculation of the statistic regarding the independence or the conditional independence by the causal model estimation unit 132. In addition, the identification of the input variable that is conditionally independent of the output variable and the input variable that is not conditionally independent of the output variable may be performed by the calculation related to the statistical model selection criterion or the calculation related to the penalized likelihood by the causal model estimation unit 132.

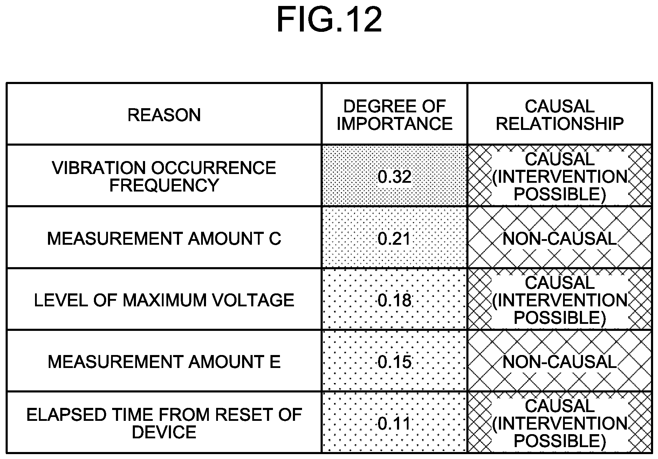

FIG. 12 is a diagram illustrating an example of a UI screen output by an information processing apparatus 100 according to a modification of the embodiment of the present disclosure. Similarly to the example of FIG. 7 described above, FIG. 12 illustrates an example of the UI screen output by the information processing apparatus 100 in a case where the user selects one variable, but a row indicating the measurement amount C and the measurement amount E and a column indicating the causal relationship with the output variable are added to the UI screen of FIG. 7.

For example, the information processing apparatus 100 may present the information regarding the input variable to the user by sorting in descending order of the degree of importance. In the example of FIG. 12, the information processing apparatus 100 displays "vibration occurrence frequency" having the highest degree of importance "0.32", "measurement amount C" having the second highest degree of importance "0.21", "level of maximum voltage" having the third highest degree of importance "0.18", "measurement amount E" having the fourth highest degree of importance "0.15", and "elapsed time from reset" having the fifth highest degree of importance "0.11" in this order.

In the example of FIG. 12, for "vibration occurrence frequency", "level of maximum voltage", and "elapsed time from reset", "causal" indicating that there is a causal relationship with the output variable and "intervention possible" indicating that the intervention effect occurring in the objective variable can be calculated are displayed. In addition, "non-causal" indicating that there is no causal relationship with the output variable is displayed for the "measurement amount C" and the "measurement amount E". Note that, in a case where the user's selection operation for an input variable with the display of "intervention possible" is received, the information processing apparatus 100 may perform display of inquiring whether to perform calculation of the intervention effect, or may automatically shift to calculation of the intervention effect.

Note that, as illustrated in FIG. 12, the information processing apparatus 100 may display a list by changing the background color of the table according to the magnitude (absolute value) of the degree of importance or the causal relationship with the output variable. For example, the information processing apparatus 100 selects a darker background color and displays a list as the degree of importance is higher. Furthermore, for example, the information processing apparatus 100 selects a background color darker than an input variable having no causal relationship with the output variable for an input variable having a causal relationship with the output variable, and displays a list.

In a case where the user displays two variables or three variables, display similar to that in FIG. 12 can be performed.

Note that the degree of importance (influence degree) varies depending on factors other than the strength of the relationship between the variable of interest and the input variable, and thus the degree of importance of the non-causal reason may be larger than the degree of importance of the causal reason.

As described in the present modification, by presenting the non-causal reason to the user, for example, even in a case where the causal reason cannot be presented as explanation, the reason can be presented. It is also possible to present non-causal reasons having the high degree of importance. This makes it possible to present a reason that is easy for the user to understand.

### <<7. Hardware Configuration Example>>

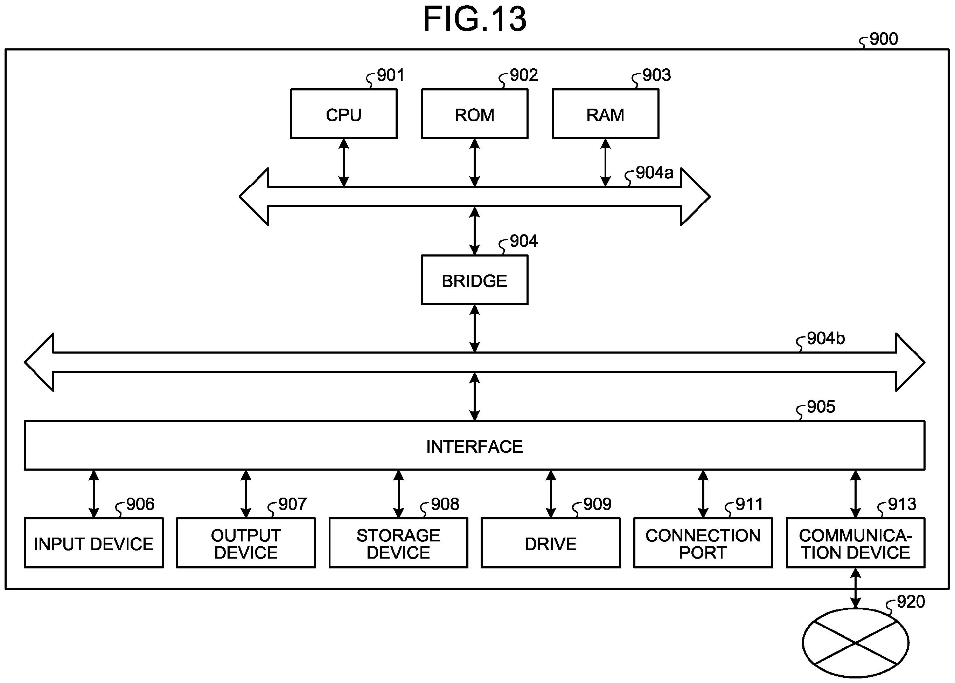

Finally, a hardware configuration of the information processing apparatus according to the present embodiment will be described with reference to FIG. 13. FIG. 13 is a block diagram illustrating an example of a hardware configuration of an information processing apparatus 900 according to the present embodiment. Note that the information processing apparatus 900 illustrated in FIG. 13 can implement the information processing apparatus 100 illustrated in FIG. 1, for example. Information processing by the information processing apparatus 100 according to the present embodiment is implemented by cooperation of software and hardware described below.

As illustrated in FIG. 13, the information processing apparatus 900 includes a central processing unit (CPU) 901, a read only memory (ROM) 902, a random access memory (RAM) 903, and a host bus 904a. Furthermore, the information processing apparatus 900 includes a bridge 904, an external bus 904b, an interface 905, an input device 906, an output device 907, a storage device 908, a drive 909, a connection port 911, and a communication device 913. The information processing apparatus 900 may include a processing circuit such as an electric circuit, a DSP, or an ASIC instead of or in addition to the CPU 901.

The CPU 901 functions as an arithmetic processing device and a control device, and controls the overall operation in the information processing apparatus 900 according to various programs. Furthermore, the CPU 901 may be a microprocessor. The ROM 902 stores programs, operation parameters, and the like used by the CPU 901. The RAM 903 temporarily stores programs used in the execution of the CPU 901, parameters that appropriately change in the execution, and the like. The CPU 901 can form, for example, the control unit 130 illustrated in FIG. 1.

The CPU 901, the ROM 902, and the RAM 903 are mutually connected by the host bus 904a including a CPU bus and the like. The host bus 904a is connected to the external bus 904b such as a peripheral component interconnect/interface (PCI) bus via the bridge 904. Note that the host bus 904a, the bridge 904, and the external bus 904b do not necessarily need to be configured separately, and these functions may be mounted on one bus.

The input device 906 is implemented by, for example, a device to which information is input by the user, such as a mouse, a keyboard, a touch panel, a button, a microphone, a switch, and a lever. Furthermore, the input device 906 may be, for example, a remote control device using infrared rays or other radio waves, or may be an external connection device such as a mobile phone or a PDA corresponding to the operation of the information processing apparatus 900. Furthermore, the input device 906 may include, for example, an input control circuit that generates an input signal based on information input by the user using the above input means and outputs the input signal to the CPU 901. By operating the input device 906, the user of the information processing apparatus 900 can input various data and instruct processing operations to the information processing apparatus 900. The input device 906 can form, for example, the input unit 110 illustrated in FIG. 1.

The output device 907 is formed of a device capable of visually or aurally notifying the user of the acquired information. Examples of such a device include a display device such as a CRT display device, a liquid crystal display device, a plasma display device, an EL display device, a laser projector, an LED projector, and a lamp, an audio output device such as a speaker and a headphone, and a printer device. The output device 907 outputs, for example, results obtained by various types of processing performed by the information processing apparatus 900. Specifically, the display device visually displays results obtained by various types of processing performed by the information processing apparatus 900 in various formats such as text, images, tables, and graphs. On the other hand, the audio output device converts an audio signal including reproduced audio data, acoustic data, or the like into an analog signal and aurally outputs the analog signal. The output device 907 can form, for example, the output unit 120 illustrated in FIG. 1.

The storage device 908 is a device for data storage formed as an example of a storage unit of the information processing apparatus 900. The storage device 908 is implemented by, for example, a magnetic storage device such as an HDD, a semiconductor storage device, an optical storage device, a magneto-optical storage device, or the like. The storage device 908 may include a storage medium, a recording device that records data in the storage medium, a reading device that reads data from the storage medium, a deletion device that deletes data recorded in the storage medium, and the like. The storage device 908 stores programs executed by the CPU 901, various data, various data acquired from the outside, and the like. The storage device 908 can store, for example, a report created by the control unit 130, an intermediate result and a final result of analysis processing, and the like.

The drive 909 is a reader and writer for a storage medium, and is built in or externally attached to the information processing apparatus 900. The drive 909 reads information recorded in a removable storage medium such as a mounted magnetic disk, optical disk, magneto-optical disk, or semiconductor memory, and outputs the information to the RAM 903. Furthermore, the drive 909 can also write information to the removable storage medium.

The connection port 911 is an interface connected to an external device, and is a connection port to an external device capable of transmitting data by, for example, a universal serial bus (USB).

The communication device 913 is, for example, a communication interface formed by a communication device or the like for connecting to the network 920. The communication device 913 is, for example, a communication card for wired or wireless local area network (LAN), long term evolution (LTE), Bluetooth (registered trademark), wireless USB (WUSB), or the like. Furthermore, the communication device 913 may be a router for optical communication, a router for asymmetric digital subscriber line (ADSL), a modem for various communications, or the like. For example, the communication device 913 can transmit and receive signals and the like to and from the Internet and other communication devices according to a predetermined protocol such as TCP/IP. In the present embodiment, the communication device 913 functions as the input unit 110 and/or the output unit 120, and can receive information input to the control unit 130 and transmit information output from the control unit 130.

Note that the network 920 is a wired or wireless transmission path of information transmitted from a device connected to the network 920. For example, the network 920 may include a public line network such as the Internet, a telephone network, or a satellite communication network, various local area networks (LANs) including Ethernet (registered trademark), a wide area network (WAN), or the like. Furthermore, the network 920 may include a dedicated line network such as an Internet protocol-virtual private network (IP-VPN).

An example of the hardware configuration capable of implementing the functions of the information processing apparatus 900 according to the present embodiment has been described above. Each of the above-described components may be implemented by using a general-purpose member, or may be implemented by hardware specialized for the function of each component. Therefore, it is possible to appropriately change the hardware configuration to be used according to the technical level at the time of carrying out the present embodiment.

Note that a computer program for implementing each function of the information processing apparatus 900 according to the present embodiment as described above can be created and mounted on a PC or the like. Furthermore, a computer-readable recording medium storing such a computer program can also be provided. The recording medium is, for example, a magnetic disk, an optical disk, a magneto-optical disk, a flash memory, or the like. Furthermore, the computer program described above may be distributed via, for example, a network without using a recording medium.

### <<8. Summary>>

Although the preferred embodiments of the present disclosure have been described in detail with reference to the accompanying drawings, the technical scope of the present disclosure is not limited to such examples. It is obvious that a person having ordinary knowledge in the technical field of the present disclosure can conceive various changes or modifications within the scope of the technical idea described in the claims, and it is naturally understood that these also belong to the technical scope of the present disclosure.

Note that each device described in the present specification may be implemented as a single device, or some or all of the devices may be implemented as separate devices. For example, in the functional configuration example of the information processing apparatus 100 illustrated in FIG. 1, the control unit 130 may be provided in an apparatus such as a server connected to the input unit 110 and the output unit 120 via a network or the like.

Furthermore, the processing described using the flowchart and the sequence diagram in the present specification may not necessarily be executed in the illustrated order. Some processing steps may be performed in parallel. In addition, additional processing steps may be employed, and some processing steps may be omitted.

Furthermore, the effects described in the present specification are merely illustrative or exemplary, and are not restrictive. That is, the technology according to the present disclosure can exhibit other effects obvious to those skilled in the art from the description of the present specification together with or instead of the above effects.

Note that the following configurations also belong to the technical scope of the present disclosure.
(1) An information processing apparatus comprising a control unit
   selecting, as a first explanatory variable, an input variable that affects a prediction result based on a causal model related to a causal relationship between a plurality of input variables and the prediction result in a prediction model using machine learning, and
   outputting information on the selected first explanatory variable.
(2) The information processing apparatus according to (1), wherein
   the control unit selects the first explanatory variable as a reason for the prediction result from among the plurality of input variables based on information as to whether the input variable and the prediction result are pseudo correlations in the prediction model generated by using machine learning, and
   outputs the information on the selected first explanatory variable.
(3) The information processing apparatus according to (2), wherein the control unit selects the input variable that is not in a pseudo correlation relationship with the prediction result as the first explanatory variable.
(4) The information processing apparatus according to (2) or (3), wherein the control unit selects the input variable that is not conditionally independent of the prediction result as the first explanatory variable.
(5) The information processing apparatus according to any one of (2) to (4), wherein the control unit outputs strength information indicating strength of a relationship between the first explanatory variable selected as the reason and the prediction result.
(6) The information processing apparatus according to any one of (2) to (5), wherein the control unit selects a combination of at least two of the input variables as the reason for the prediction result.
(7) The information processing apparatus according to (6), wherein the control unit outputs strength information indicating strength of a relationship between the at least two input variables included in the combination and the prediction result in association with information regarding the combination.
(8) The information processing apparatus according to (5) or (7), wherein
   the control unit determines an order or a color on a display screen corresponding to the first explanatory variable based on the strength information, and
   outputs the display screen.
(9) The information processing apparatus according to any one of (2) to (8), wherein
   the control unit outputs an interface for determining the combination of the input variables, and
   determines a combination of the input variables based on an operation corresponding to the interface.
(10) The information processing apparatus according to any one of (2) to (9), wherein the control unit estimates a causal graph with an output variable indicating the prediction result as an objective variable for the plurality of the input variables, and selects the first explanatory variable as the reason from the input variables having a direct causal relationship with the objective variable.
(11) The information processing apparatus according to any one of (2) to (10), wherein for the plurality of input variables, the control unit estimates a causal graph regarding a nearest node using the nearest node included in a hidden layer closest to the prediction model as an objective variable, and selects the first explanatory variable as the reason from the input variables having a direct causal relationship with the objective variable.
(12) The information processing apparatus according to (11), wherein the control unit selects the first explanatory variable serving as the positive reason on a basis of the causal graph related to the nearest node having a positive weight among the nearest nodes, and selects the first explanatory variable serving as the negative reason on a basis of the causal graph related to the nearest node having a negative weight among the nearest nodes.
(13) The information processing apparatus according to any one of (2) to (12), wherein the control unit calculates an intervention effect in a case of intervening in the first explanatory variable selected as the reason.
(14) The information processing apparatus according to any one of (1) to (13), wherein
   the input variable includes information acquired by a sensor.
(15) The information processing apparatus according to any one of (1) to (14), wherein
   the input variable includes information on an operating environment or an operating state of a device acquired by a sensor.
(16) The information processing apparatus according to any one of (1) to (15), wherein
   the input variable includes information regarding temperature, humidity, voltage, current, electric power, or vibration acquired by a sensor, and
   the control unit selects at least one of the information regarding temperature, humidity, voltage, current, electric power, or vibration acquired by the sensor as the first explanatory variable.
(17) The information processing apparatus according to any one of (1) to (16), wherein
   the input variable includes information about an age or a history of a person.
(18) The information processing apparatus according to any one of (1) to (17), wherein
   the control unit acquires a selection operation for the output first explanatory variable, and
   calculates an intervention effect for the first explanatory variable selected by the selection operation.
(19) The information processing apparatus according to any one of (1) to (18), wherein
   the control unit selects the input variable that does not affect the prediction result as a second explanatory variable based on the causal model, and
   outputs information on the second explanatory variable while distinguishing the information on the second explanatory variable from the information on the first explanatory variable.
(20) The information processing apparatus according to (19), wherein
   the control unit selects the second explanatory variable as a reason for the prediction result from among the plurality of input variables based on information as to whether the input variable and the prediction result are pseudo correlations in the prediction model generated by using machine learning, and
   outputs information on the selected second explanatory variable while distinguishing the information on the second explanatory variable from the information on the first explanatory variable.
(21) The information processing apparatus according to (20), wherein the control unit selects the input variable having a pseudo correlation with the prediction result or the input variable that becomes conditionally independent as the second explanatory variable.
(22) An information processing method comprising:
   selecting, as a first explanatory variable, an input variable that affects a prediction result based on a causal model related to a causal relationship between a plurality of input variables and the prediction result in a prediction model using machine learning; and
   outputting information on the selected first explanatory variable.
(23) A program for causing a computer:
   to select, as a first explanatory variable, an input variable that affects a prediction result based on a causal model related to a causal relationship between a plurality of input variables and the prediction result in a prediction model using machine learning; and
   to output information on the selected first explanatory variable.

### Reference Signs List

- 100: INFORMATION PROCESSING APPARATUS
- 110: INPUT UNIT
- 120: OUTPUT UNIT
- 130: CONTROL UNIT
- 131: INPUT AND OUTPUT CONTROL UNIT
- 132: CAUSAL MODEL ESTIMATION UNIT
- 133: SELECTION UNIT
- 134: EVALUATION UNIT
- 135: INTERVENTION EFFECT CALCULATION UNIT

## Claims

1. An information processing apparatus comprising a control unit
selecting, as a first explanatory variable, an input variable that affects a prediction result based on a causal model related to a causal relationship between a plurality of input variables and the prediction result in a prediction model using machine learning, and
outputting information on the selected first explanatory variable.

2. The information processing apparatus according to claim 1, wherein
the control unit selects the first explanatory variable as a reason for the prediction result from among the plurality of input variables based on information as to whether the input variable and the prediction result are pseudo correlations in the prediction model generated by using machine learning, and
outputs the information on the selected first explanatory variable.

3. The information processing apparatus according to claim 2, wherein the control unit selects the input variable that is not in a pseudo correlation relationship with the prediction result as the first explanatory variable.

4. The information processing apparatus according to claim 2, wherein the control unit selects the input variable that is not conditionally independent of the prediction result as the first explanatory variable.

5. The information processing apparatus according to claim 2, wherein the control unit outputs strength information indicating strength of a relationship between the first explanatory variable selected as the reason and the prediction result.

6. The information processing apparatus according to claim 2, wherein the control unit selects a combination of at least two of the input variables as the reason for the prediction result.

7. The information processing apparatus according to claim 6, wherein the control unit outputs strength information indicating strength of a relationship between the at least two input variables included in the combination and the prediction result in association with information regarding the combination.

8. The information processing apparatus according to claim 5, wherein
the control unit determines an order or a color on a display screen corresponding to the first explanatory variable based on the strength information, and
outputs the display screen.

9. The information processing apparatus according to claim 6, wherein
the control unit outputs an interface for determining the combination of the input variables, and
determines a combination of the input variables based on an operation corresponding to the interface.

10. The information processing apparatus according to claim 2, wherein the control unit estimates a causal graph with an output variable indicating the prediction result as an objective variable for the plurality of the input variables, and selects the first explanatory variable as the reason from the input variables having a direct causal relationship with the objective variable.

11. The information processing apparatus according to claim 2, wherein for the plurality of input variables, the control unit estimates a causal graph regarding a nearest node using the nearest node included in a hidden layer closest to the prediction model as an objective variable, and selects the first explanatory variable as the reason from the input variables having a direct causal relationship with the objective variable.

12. The information processing apparatus according to claim 11, wherein the control unit selects the first explanatory variable serving as the positive reason on a basis of the causal graph related to the nearest node having a positive weight among the nearest nodes, and selects the first explanatory variable serving as the negative reason on a basis of the causal graph related to the nearest node having a negative weight among the nearest nodes.

13. The information processing apparatus according to claim 2, wherein the control unit calculates an intervention effect in a case of intervening in the first explanatory variable selected as the reason.

14. The information processing apparatus according to claim 1, wherein
the input variable includes information acquired by a sensor.

15. The information processing apparatus according to claim 14, wherein
the input variable includes information on an operating environment or an operating state of a device acquired by a sensor.

16. The information processing apparatus according to claim 15, wherein
the input variable includes information regarding temperature, humidity, voltage, current, electric power, or vibration acquired by a sensor, and
the control unit selects at least one of the information regarding temperature, humidity, voltage, current, electric power, or vibration acquired by the sensor as the first explanatory variable.

17. The information processing apparatus according to claim 1, wherein
the input variable includes information about an age or a history of a person.

18. The information processing apparatus according to claim 13, wherein
the control unit acquires a selection operation for the output first explanatory variable, and
calculates an intervention effect for the first explanatory variable selected by the selection operation.

19. The information processing apparatus according to claim 1, wherein
the control unit selects the input variable that does not affect the prediction result as a second explanatory variable based on the causal model, and
outputs information on the second explanatory variable while distinguishing the information on the second explanatory variable from the information on the first explanatory variable.

20. The information processing apparatus according to claim 19, wherein
the control unit selects the second explanatory variable as a reason for the prediction result from among the plurality of input variables based on information as to whether the input variable and the prediction result are pseudo correlations in the prediction model generated by using machine learning, and
outputs information on the selected second explanatory variable while distinguishing the information on the second explanatory variable from the information on the first explanatory variable.

21. The information processing apparatus according to claim 20, wherein the control unit selects the input variable having a pseudo correlation with the prediction result or the input variable that becomes conditionally independent as the second explanatory variable.

22. An information processing method comprising:
selecting, as a first explanatory variable, an input variable that affects a prediction result based on a causal model related to a causal relationship between a plurality of input variables and the prediction result in a prediction model using machine learning; and
outputting information on the selected first explanatory variable.

23. A program for causing a computer:
to select, as a first explanatory variable, an input variable that affects a prediction result based on a causal model related to a causal relationship between a plurality of input variables and the prediction result in a prediction model using machine learning; and
to output information on the selected first explanatory variable.
